# EUROPEAN PATENT APPLICATION

(11) **EP 1 586 787 A1**
(43) Date of publication of application: **19.10.2005**
(21) Application number: 05006072.2
(22) Date of filing: 19.03.2005
(51) Int. Cl.: F16D 55/227

(54) **One piece sliding brake caliper**

(30) Priority: 14.04.2004 US 824022
(71) Applicant: Akebono Corporation North America, Farmington Hills, MI 48331 (US)
(72) Inventor: Jedele, Philip N., Ypsilanti Michigan 48198 (US)
(74) Representative: Neumann, Ernst Dieter

(57) **Abstract**

A caliper assembly (20) has a one-piece housing (30) with a first (38) and second (40) wall opposing one another. A pair of bridge sides (44,46) connect the first and second walls. A pair of bores (56,56') are formed in the first wall. Each bore receives a piston assembly. An opening (50) is formed between the first wall, second wall and pair of bridge sides. The opening enables access into the caliper body. At least one (55) or two u-shaped apertures are formed in the second wall. The at least one or two apertures are continuous with the opening to enable access into the body.

## Description

### BACKGROUND OF THE INVENTION

The present invention relates to braking systems and, more particularly, to brake calipers.

Typical sliding brake calipers, known as "fist" brake calipers utilize two castings that serve two separate functions in a brake caliper. The first casting the caliper body, provides a housing for the hydraulic piston that squeezes the friction pads together. The second casting, the support bracket, provides pad anchorage and support for slide pins that hold the caliper body in position. These two parts are made from relatively expensive castings and require extensive machining to mate the components and assembly together.

Another type of caliper, known as a "FIS" caliper does not include a support bracket. The caliper body provides a port for the caliper slide pins and anchorage of the outboard friction pad. The inboard friction pad is anchored to the knuckle thus taking the inboard friction brake torque reaction directly to the knuckle arms. The caliper body is made in two halves and is bolted together. The caliper body bridge is substantially thick to provide anchorage for ,the caliper body bolts. The assembly of the caliper to the knuckle must be done in several steps such that the inboard pads must be installed to the knuckle before installing the caliper body. In this design, since the knuckle includes the brake pad and abutment, the caliper cost is reduced, however, this cost is transferred to the knuckle.

U.S. Patent No. 5,249,649 illustrates a caliper design which utilizes arms built directly into the knuckle to react to both the inboard and outboard pad brake torque. The caliper body contains a slide pin mechanism that is bolted to the knuckle to hold the caliper body in position. This design reduces caliper costs since the cost is transferred, by addition of the friction pad anchorage, to the knuckle.

### SUMMARY OF THE INVENTION

The present invention provides the arts with a simple one-piece caliper housing design. The present invention provides a caliper housing which acts both as a support bracket as well as a caliper body. The present invention provides a one-piece body casting as well as a one-piece sliding caliper. The present invention provides simplified machining of the caliper body. The present invention enables both brake pads to be contained within the caliper. The present invention provides a relatively thin caliper bridge which acts in tension. Also, the present invention provides pad abutment such that the abutment is above the pad friction center when resting against the caliper bridge.

From the following detailed description, accompanying drawings and appended claims, other objects and advantages of the present invention will become apparent to those skilled in the art.

### BRIEF DESCRIPTION OF THE DRAWINGS

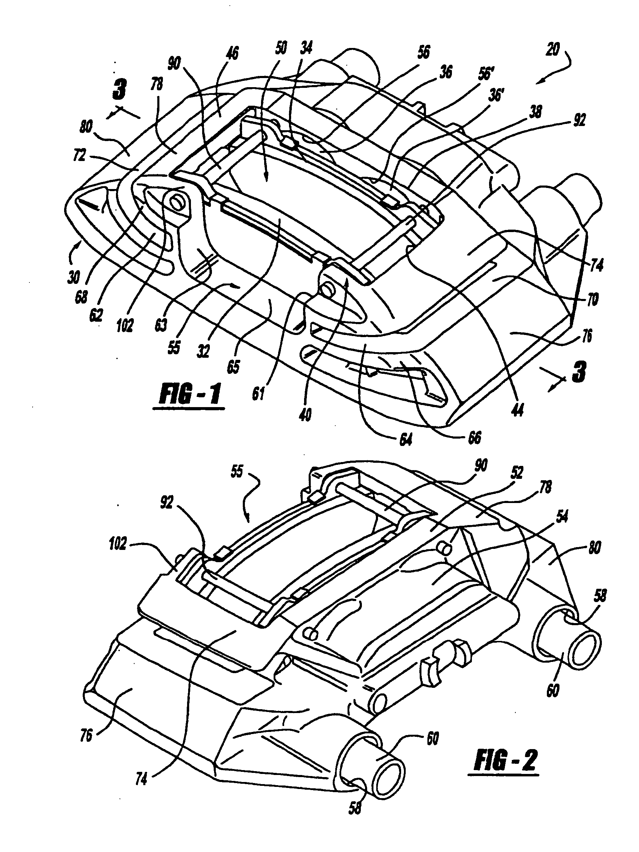

Figure 1 is a perspective view of a first caliper design in accordance with the present invention.

Figure 2 is a rear perspective view of a caliper of Figure 1.

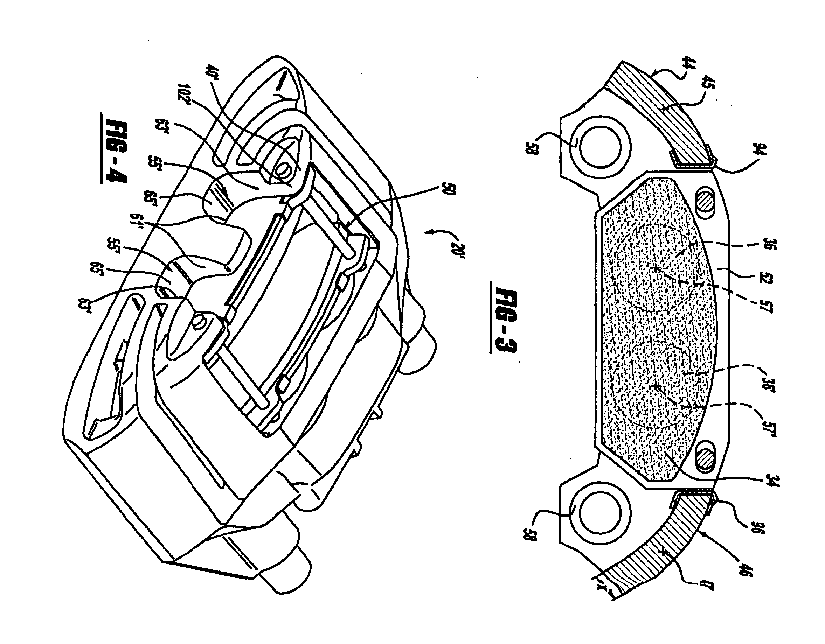

Figure 3 is a cross-section view through line 3-3 of Figure 1.

Figure 4 is a perspective view of a second embodiment of the present invention.

Figure 5 is a perspective view of a third embodiment of the present invention.

Figures 6 - 10 illustrate diagrammatic views of methods of manufacturing the caliper bodies.

### DETAILED DESCRIPTION OF THE PREFERRED EMBODIMENT

Turning to the Figures, a caliper assembly is shown and designated with the reference numeral 20. The caliper assembly 20 includes a one-piece caliper housing 30, a pair of brake pads 32 and 34 as well as a pair of piston assemblies 36, 36'.

The caliper housing 30 includes a first wall 38, a second wall 40 and a caliper bridge having two sides 44 and 46. The first wall 38 and second wall 40 oppose one another. The caliper bridge sides 44 and 46 connect with the first and second walls 38 and 40 and also oppose one another. The first wall 38, second wall 40 and caliper bridge sides 44 and 46 define an opening 50. The opening 50 is formed on the outer radius of the caliper bridge and enables brake pads 32 and 34 to be inserted through the opening 50.

Turning to the first wall portion 38, the first wall portion 38 includes an inner beam portion 52 and a cylinder portion 54. The cylinder portion 54 includes a pair of bores 56, 56'. Each bore 56, 56' receives a piston assembly 36, 36'. The wall portion 38 also includes a pair of apertures 58 which receive slide sleeves 60 which receive bolts to secure the housing to a knuckle. The slide sleeves 60 are tubular to enable passage of bolts through the slide sleeves to secure the caliper to a knuckle. The aperture centers are located radially near the piston bore centers in order to reduce the bending offset distance.

The inner beam 52 spans between the bridge sides 44 and 46. The centroid 45, 47 of the bridge sides 44, 46 are approximately inline with the piston bore centers 57, 57'. Accordingly, this enables the bridge sides 44, 46 to counteract the hydraulic piston forces by being more in tension than in bending. Accordingly, this provides a stiffer caliper which utilizes less fluid displacement and improves, by reducing, the vehicle driver's pedal travel.

Since the bridge sides act in tension, the bridge sides are thin and have a desired thickness (t) less than conventional caliper designs. The thickness (t) of the bridge is between eight to fourteen millimeters and preferably between ten to twelve millimeters. Also, the thinner bridge sides provides a smaller wheel radial package space which enables a larger rotor diameter and a larger caliper effective radius. Thus, the caliper produces greater braking torque for a given piston pressure and lining coefficient. In many cases, the larger effective radius enables the caliper piston size to be decreased. This yields an even greater reduction of fluid displacement and reduces vehicle brake pedal travel. The larger rotor enables greater rotor mass to be used for braking thermal energy absorption. This in turn, provides lower brake lining temperatures which, in turn, provides greater lining life.

The second wall 40 includes a U-shaped aperture 55, in the outer beam 102, which is continuous with the opening 50. Thus, the U-shaped aperture opening originates from the caliper bridge and extends away from the caliper bridge which is opposite to conventional calipers. The aperture is defined by a pair of legs 61 and 63 and an elongated web 65. The legs 61, 63 are parallel with each other or project away from one another creating a larger gap at the opening 50. The U-shaped aperture 55 receives a tool to machine the caliper which will be explained herein. The second wall 40 includes indentions 62 and 64 which define ribs 66 and 68.

The bridge sides 44 and 46 include indentations 70 and 72. The indentations 70 and 72 are continuous with the indentation 62, 64 on the second wall 40. The indentation defines ribs 74 and 76, 78 and 80 on the bridge sides 44 and 46. The ribs provide an overall hoop appearance extending around the caliper housing. Also, the indentations 70, 72 and 62 and 64 may include an aperture.

Pins 90 and 92 span the opening 50 and support the brake pads 32 and 34. The pins 90 and 92 are received in apertures in the first and second walls. The pads 32 and 34 may include stainless steel clips 94, 96. The clips enhance the corrosion resistance of the caliper. Both brake pads 32 and 34 abut against bridge portions on the respective bridge sides 44, 46. Thus, the pads 32 and 34 are contained within the caliper.

Brake pad 34 may have a surface area smaller than brake pad 32. Brake pad 34 is positioned against the piston assemblies 36, 36' so that the pad abutment is above the pad friction center against the bridge sides 44, 46. The outer pad 32 may have an increased area to improve lining life. Also, by having a larger pad area, the brake pad 32 can have a decreased pad thickness in order to provide greater vehicle axial wheel packaging space for the caliper. The pad 32 abuts the bridge sides 44, 46 and contacts the outer beam 102 of the second wall. The outer beam 102 provides necessary stiffness to support the brake pad 32 and resist the piston hydraulic forces. Also, material can be removed to form the indentations in non key areas so that the caliper stiffness is maintained while reducing the overall weight.

Turning to Figure 4, the second embodiment of the present invention is shown. Here, the caliper assembly 20' is substantially similar to the one previously described, however, the second wall 40' includes a pair of U-shaped apertures 55' in the outer beam 102', which are continuous with the opening 50. Thus, the U-shaped aperture opening originates from the caliper bridge and extends away from the caliper bridge which is opposite to conventional calipers. The apertures are defined by a pair of legs 61' and 63' and a web 65'. The legs 61', 63' are parallel with each other or project away from one another creating a larger gap at the opening 50. The legs 61' form a singular post 67 separating the two U-shaped apertures 55'. The U-shaped aperture 55' both receive a tool to machine the caliper which will be explained herein.

Turning to Figure 5, a third embodiment is shown. The third embodiment is similar to the second embodiment, however the separating post 104 extends a desired height between the aperture 55'. The separating post 104 includes a bore 106 to receive a pad pin 108. Also, the wall 38" includes a projecting portion 110 with a bore 112 to receive an end of the pad pin 108. This enables a single pad pin design which, in turn, reduces cost and weight as well as enhancing assembly.

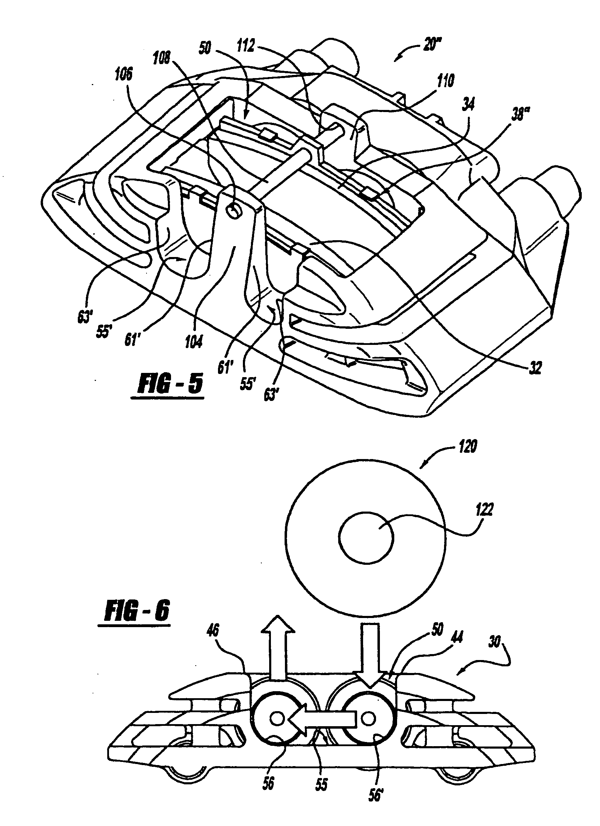

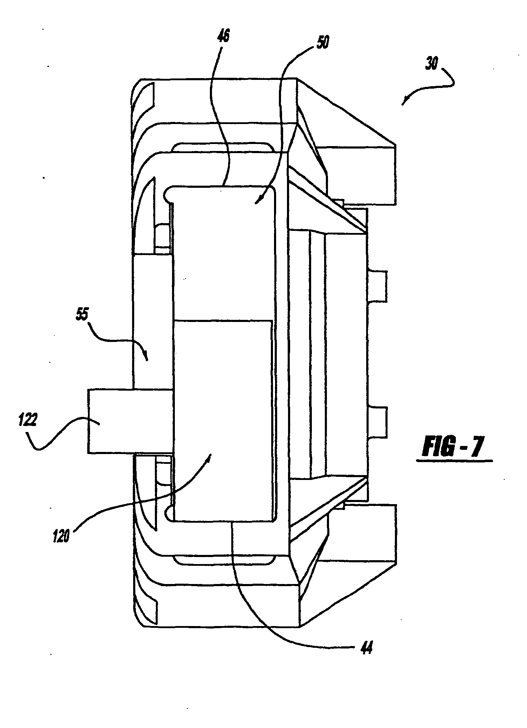

Turning to Figures 6 through 10, methods for forming the caliper housings and assemblies will be discussed.

The caliper housing 30 is manufactured by casting or the like. After casting, the piston bores 56, 56' are machined to finish the inside surface of the bores 56, 56'. The two finishing tools are dropped into the U-shaped aperture 55 and opening 50 and passed axially into the bores 56, 56'. Next, a milling cutter 120 is dropped into the opening 50 of the caliper housing 30 machining bridge side 44. The milling tool is moved along the elongated web to finish the inner surface of the second wall 40, and if needed, first wall 38. The milling tool then is removed thus machining bridge side 46. As can be seen, the shaft 122 of the milling cutter 120 enters into the U-shaped aperture 55. After the milling cutter has been turned and finishes the inner surfaces, the milling cutter is removed. Thus, the interior surfaces of the caliper housing 30 can be finished in a simplified process.

After the inner surfaces of the caliper 30 is finished, the piston assemblies 36, 36' are positioned within the bores 56, 56'. The stainless steel clips are installed on the side bridges. The brake pads 32 and 34 are inserted into the caliper housing 30. The pins 90, 92, are positioned with the brake pads to hold the brake pads 32, 34 in position. Next, the slide sleeves 60 are positioned into the apertures 58 for assembly onto the knuckle.

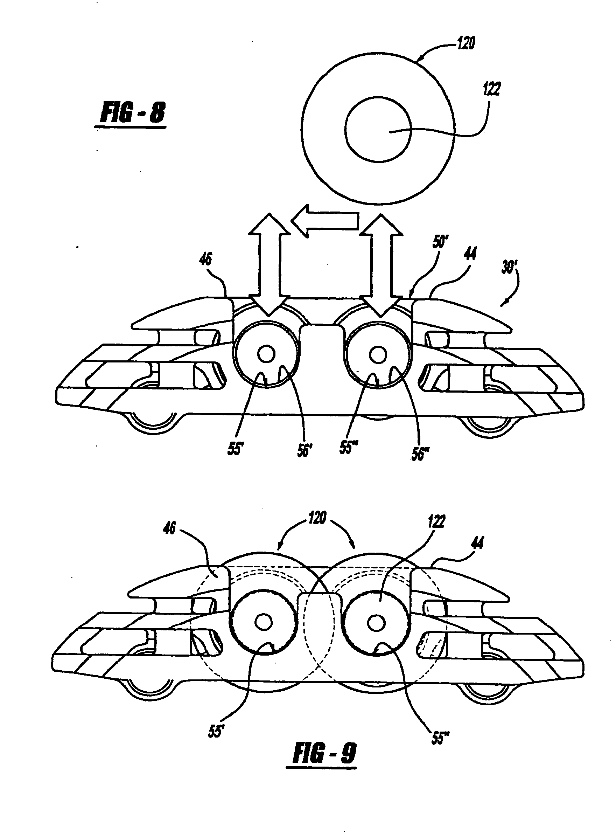

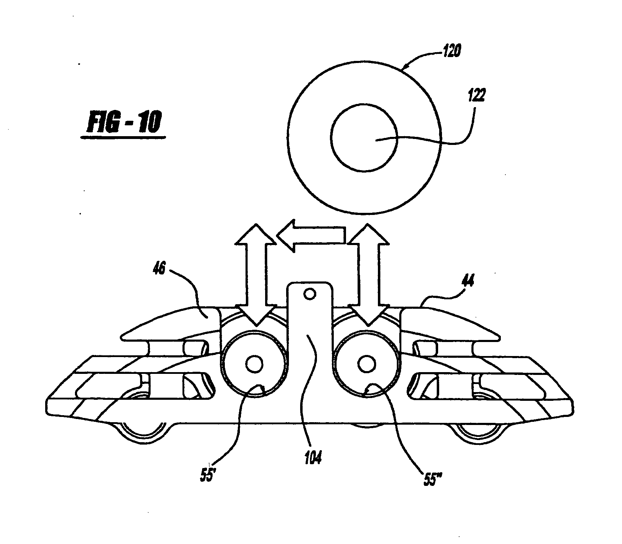

Turning to Figures 8 and 9, a second method for forming the caliper housing and assembly will be discussed.

The caliper housing 30' is manufactured by casting or the like. After casting, the piston bores 56, 56" are machined to finish the inside surface of the bores 56, 56". Both finishing tools are dropped into both U-shaped apertures 55', 55" and opening 50 and passed axially into the bores 56', 56". Thus, the U-shaped openings 55' can be minimized since they only need to be large enough to receive the tool shaft, instead of the entire tool diameter. Next, a milling cutter 120 is dropped into the opening 50' and one of the U-shaped apertures 55 of the caliper housing 30'. The milling tool finishes the inner surface of the bridge sides 44, as well as the inner surface of the second wall 40 and, if need, the first wall 38' in the region of the first U-shaped aperture. Next, the milling cutter 120 is removed and dropped into opening 50' and the other U-shaped aperture 55' in the housing 30'. The inner surface of bridge side 46, as well as the inner surface of the second wall, and if need, the first wall are finished in the region of the second aperture. As can be seen, the shaft 122 of the milling cutter 120 enters into both the U-shaped apertures 55', 55". After the milling cutter has been turned and finishes the inner surfaces, the milling cutter is removed. Thus, the interior surfaces of the caliper housing 30 can be finished in a simplified process.

After the inner surfaces of the caliper 30 is finished, the piston assemblies 36, 36' are positioned within the bores 56", 56". The stainless steel clips are installed on the side bridges. The brake pads 32 and 34 are inserted into the caliper housing 30. The pins, are positioned with the brake pads to hold the brake pads in position. Next, the slide sleeves are positioned into the apertures for assembly to the knuckle.

Figure 10 illustrates a method according to the third embodiment. Here, the steps are the same as in the second embodiment illustrated in Figures 8 and 9. The milling cutter 120 is raised higher from the aperture 55" to clear post 104.

It should be appreciated that while the twin piston caliper design is shown, the design may be readily modified to include three, four or more pistons. This may be accomplished by widening the opening or by the addition of additional U-shape apertures.

The description of the invention is merely exemplary in nature and, thus, variations that do not depart from the gist of the invention are intended to be within the scope of the invention. Such variations are not to be regarded as a departure from the spirit and scope of the invention.

## Claims

1. A brake caliper comprising:
a one piece body, said body having a first wall and an opposing second wall, a pair of bridge sides connect said first and second walls;
said first wall including at least two bores each bore for receiving a piston assembly;
an opening is formed between said first wall, second wall and pair of bridge sides, said opening enabling access into said body;
at least one aperture formed in said second wall, said aperture is continuous with said opening for enabling tools access into said body through said apertures and said opening for machining an inner surface of said body.

2. The caliper according to Claim 1 wherein said bridge sides define a centroid which are substantially aligned with centers of said at least two bores enabling tension deflection of said bridge sides.

3. The caliper according to Claim 1 wherein said bridge sides have a desired thickness between 8 mm to 14 mm.

4. The caliper according to Claim 1, wherein said second wall has a pair of apertures forming in said wall both continuous with said opening.

5. The caliper according to Claim 4, wherein a wall section separates said pair of apertures, said wall extending a desired distance to enable receiving of a paid pin.

6. The caliper according to Claim 4, wherein said apertures are U or V-shaped.

7. A caliper assembly comprising:
a one piece body, said body having a first wall and an opposing second wall, a pair of bridge sides connect said first and second walls;
said first wall including at least two bores each for receiving a piston assembly;
an opening formed between said first wall, second wall and pair of bridge sides, said opening enabling access into said body, at least one aperture in said second wall, said aperture continuous with said opening for enabling access into said body;
a first and second brake pad, said first brake pad abutting said first wall and the second brake pad abutting said second wall;
at least two piston assemblies each positioned in one of said at least two bores; and
a pair of apertures on said first wall enabling coupling with a knuckle.

8. The caliper assembly according to Claim 7 wherein said bridge sides have a thickness between 8 mm to 14 mm.

9. The caliper assembly according to Claim 7 wherein said at least one aperture originates at said bridge sides and extends on said second wall away from said bridge sides.

10. The caliper according to Claim 7, wherein said second wall has a pair of apertures forming in said wall both continuous with said opening.

11. The caliper according to Claim 10, wherein a wall section separates said pair of apertures, said wall extending a desired distance to enable receiving of a paid pin.

12. The caliper assembly according to Claim 10, wherein said bridge sides define centroids substantially aligned with centers of said at least two bores enabling tension deflection of said bridge sides.

13. The caliper assembly according to Claim 12, wherein said bridge sides have a thickness between 8 mm to 14 mm.

14. The caliper assembly according to Claim 7 wherein said first brake pad abuts said piston assemblies so that said pad abutment is above a pad friction center.

15. The caliper assembly according to Claim 10, wherein said at least one aperture has a U or V-shape.

16. A method of manufacturing a caliper comprising:
forming a caliper body having a first wall with at least two bores, a second wall opposing said first wall with a single aperture, a pair of bridge sides connecting said first and second walls defining an opening continuous with said at least one aperture;
dropping a tool into said opening and said apertures finishing first abutment;
traversing said tool along said wall;
finishing an inner surface of said caliper body;
removing said tool from said caliper body finishing second abutment.

17. The method according to Claim 16, further comprising finishing an inner surface of said bridge sides.

18. The method according to Claim 17, further comprising dropping a tool into said at least one aperture and said opening and axially moving said tool for finishing said one of said bores and repeating said step for finishing the other of said bores.

19. The method according to Claim 16, wherein said second wall has a pair of apertures and further comprising dropping said tool in each aperture for finishing said surface.

20. A method of manufacturing a caliper assembly comprising:
forming a caliper body having a first wall with at least two bores, a second wall opposing said first wall with at least one aperture, a pair of bridge sides connecting said first and second walls defining an opening continuous with said at least one aperture;
dropping a tool into said opening and said at least one aperture in said caliper body; and
finishing an inner surface of said caliper body;
removing said tool from said caliper body;
positioning a piston assembly in each of said at least two bores in said first wall;
securing a first and second brake pad in said caliper body, said first brake pad adjacent said first wall and said second brake pad adjacent said second wall.

21. The caliper assembly according to Claim 20, wherein said at least one aperture has a U or V-shape.
